# FASCICULE DE BREVET EUROPEEN

(11) **EP 3 741 482 B1**
(45) Date de publication et mention de la délivrance du brevet: **13.04.2022**
(21) Numéro de dépôt: 20172977.9
(22) Date de dépôt: 05.05.2020
(51) Int. Cl.: B22F 3/105, B29C 64/141, B29C 64/153, B33Y 70/00, B22F 3/00, B33Y 10/00, B33Y 70/10, B33Y 80/00, C22C 1/04, C22C 32/00

(54) **PROCEDE DE FABRICATION D'UNE PIECE EN ALLIAGE D ALUMINIUM PAR FABRICATION ADDITIVE A PARTIR D'UN MELANGE DE POUDRES CONTENANT DE LA ZIRCONE YTTRIEE**
HERSTELLUNGSVERFAHREN EINES WERKSTÜCKS AUS ALUMINIUMLEGIERUNG DURCH ADDITIVE HERSTELLUNG AUS EINEM PULVERGEMISCH, DAS YTTRIUM-STABILISIERTES ZIRKONOXID ENTHÄLT
METHOD FOR MANUFACTURING A PART MADE OF ALUMINIUM ALLOY BY ADDITIVE MANUFACTURING FROM A MIXTURE OF POWDERS CONTAINING YTTRIUM-STABLISED ZIRCONIA

(30) Priorité: 13.05.2019 FR 1904935
(43) Date de publication de la demande: 25.11.2020
(73) Titulaire: Commissariat à l'énergie atomique et aux énergies alternatives, 75015 Paris (FR)
(72) Inventeur: OPPRECHT, Mathieu, 38054 GRENOBLE CEDEX 09 (FR); GARANDET, Jean-Paul, 38054 GRENOBLE CEDEX 09 (FR); ROUX, Guilhem, 38054 GRENOBLE CEDEX 09 (FR); SOULIER, Mathieu, 38054 GRENOBLE CEDEX 09 (FR)
(74) Mandataire: Brevalex

(56) Documents cités:
- WO-A1-2018/144323
- US-A1- 2018 161 874
- US-A1- 2019 039 183
- JOHN H. MARTIN ET AL: "3D printing of high-strength aluminium alloys", NATURE, vol. 549, no. 7672, 20 septembre 2017 (2017-09-20), pages 365-369, XP055409795, London ISSN: 0028-0836, DOI: 10.1038/nature23894

## Description

### DOMAINE TECHNIQUE

La présente invention se rapporte au domaine général de la fabrication de pièce en alliage d'aluminium par fabrication additive.

L'invention concerne un procédé de fabrication de pièces en alliage d'aluminium à partir d'un mélange de poudre contenant des particules à base d'aluminium et des particules de zircone yttriée.

L'invention concerne également une pièce en alliage d'aluminium obtenue avec ce procédé.

L'invention est particulièrement intéressante puisqu'elle permet de remédier aux problèmes de fissuration à chaud des alliages d'aluminium dans les procédés de fabrication additive impliquant une fusion.

L'invention trouve des applications dans de nombreux domaines industriels, et notamment dans les domaines de l'automobile, de l'aéronautique, de l'énergie (par exemple, pour la fabrication d'échangeurs thermiques) ou encore dans le cas de renforcement structural par les particules non transformées.

### ÉTAT DE LA TECHNIQUE ANTÉRIEURE

Les différents procédés de fabrication de pièces en alliage métallique par fabrication additive (aussi appelée impression 3D) ont pour point commun d'utiliser la matière première sous forme de poudres et de mettre en forme l'alliage métallique via une étape de fusion de ces poudres.

Les différents procédés de fabrication additive concernés incluent, en particulier, les procédés de fusion sur lit de poudre (ou PBF pour « Powder Bed Fusion » en terminologie anglo-saxonne) et les procédés de dépôt de matière sous énergie concentrée (ou DED pour « Directed Energy Déposition » en terminologie anglo-saxonne).

Les procédés PBF consistent à faire fondre certaines régions d'un lit de poudre, par exemple au moyen d'un faisceau laser. Les procédés DED consistent à amener le matériau solide, par exemple sous forme de fil ou de poudre, de le faire fondre, par exemple au moyen d'un faisceau laser, et de déposer le matériau fondu.

Avec de tels procédés, il est possible de produire industriellement des pièces, de forme simple ou complexe, ayant des propriétés mécaniques satisfaisantes.

Cependant, certains alliages d'aluminium sont sujets à des problèmes de fissuration à chaud résultants d'une solidification dendritique colonnaire, à l'origine d'une microstructure sensible aux contraintes thermomécaniques pendant la solidification, notamment pour une fraction solide allant de 0,9 à 0,98.

Pour remédier à cet inconvénient, différentes solutions ont été envisagées.

Par exemple, il est possible de modifier la composition chimique de l'alliage de la poudre, en utilisant, notamment, le Scamalloy. Il s'agit d'un alliage léger comprenant de l'aluminium, du magnésium et du scandium, développé spécifiquement pour la fabrication additive. Au cours de la solidification, des particules primaires Al₃Sc précipitent à partir du liquide et actent comme des germes pour la croissance de grain de la matrice Al. Le Scandium permet donc un raffinement de la microstructure et le développement d'une solidification dendritique équiaxe. Cependant, le Scandium est un élément particulièrement cher, ce qui augmente considérablement les coûts de la matière première.

Une autre solution consiste à ajouter à la poudre d'aluminium des nanoparticules d'un matériau dit germinant, moins cher que le scandium, pour promouvoir une solidification équiaxe.

Dans le document WO 2018/144323 A1, des poudres en alliage d'aluminium sont mélangées avec des nanoparticules en Zr, Ta, Nb, Ti ou encore en un des leurs oxydes, nitrures, hydrures, borures, carbures et aluminures pour fabriquer des pièces en alliage d'aluminium par fabrication additive. Parmi les différents exemples de réalisation décrits, des pièces sont fabriquées par fusion sélective par laser (aussi notée SLM) à partir, par exemple, d'un mélange comprenant :
- de l'aluminium et des nanoparticules de tantale de 50nm de diamètre (1% volumique), ou
- un alliage d'aluminium (Al7075 ou Al6061) et des nanoparticules de zirconium de 500-1500nm de diamètre (1% volumique).

Dans l'article de Zhang et al. ("Effect of Zirconium addition on crack, microstructure and mechanical behavior of selective laser melted Al-Cu-Mg alloy", Scripta Materialia 134 (2017), 6-10), le raffinement des grains d'un alliage d'aluminium Al-Cu-Mg est réalisé en ajoutant 2% massique de particules de zirconium de taille moyenne 8,8µm.

Dans l'article de Martin et al. ("3D printing of high-strength aluminium alloys", Nature 549 (2017), pages 365-369), des poudres d'alliages d'aluminium de séries 7075 (distribution bimodale à 15µm et 45µm) et 6061 (d₅₀ de 45µm) ont été mélangées avec 1% volumique de nanoparticules de Zirconium stabilisées à l'hydrogène (ZrH₂) pour remédier au problème de fissuration à chaud des alliages d'aluminium obtenu par SLM. Les nanoparticules sont électrostatiquement assemblées sur la poudre de base pour obtenir une répartition uniforme. Aucune information n'est donnée sur la granulométrie des nanoparticules utilisées.

US-A 2019 039 183 et US-A 2018 161 874 divulguer un procédé de fabrication d'une pièce en alliage d'Aluminium par fabrication additive utilisant une couche d'un mélange de poudres localement fondue et puis solidifiée.

### EXPOSE DE l'INVENTION

Un but de la présente invention est de proposer un procédé de fabrication de pièces en alliages d'aluminium ne présentant pas de fissure, le procédé devant être simple à mettre en œuvre et bon marché.

Pour cela, la présente invention propose un procédé de fabrication d'une pièce en alliage d'aluminium par fabrication additive comprenant au moins une étape au cours de laquelle une couche d'un mélange de poudres est fondue puis solidifiée,
le mélange de poudres comprenant :
   - des premières particules comprenant au moins 80% massique d'aluminium et jusqu'à 20% massique d'un ou plusieurs éléments additionnels, et
   - des deuxièmes particules en zircone yttriée,
le mélange de poudres comprenant au moins 1,5% volumique de deuxièmes particules.

L'invention se distingue fondamentalement de l'art antérieur par l'adjonction de particules de zircone yttriée (ZrO₂-Y₂O₃ plus communément appelé YSZ) à la poudre à base d'aluminium. L'adjonction de telles particules permet de favoriser une structure de solidification équiaxe et ainsi éliminer la fissuration dans la pièce finale.

Contre toute attente, la zircone yttriée donne naissance à des particules germinantes d'Al₃Zr par réaction avec l'aluminium selon les réactions suivantes :

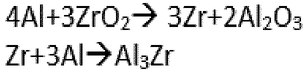

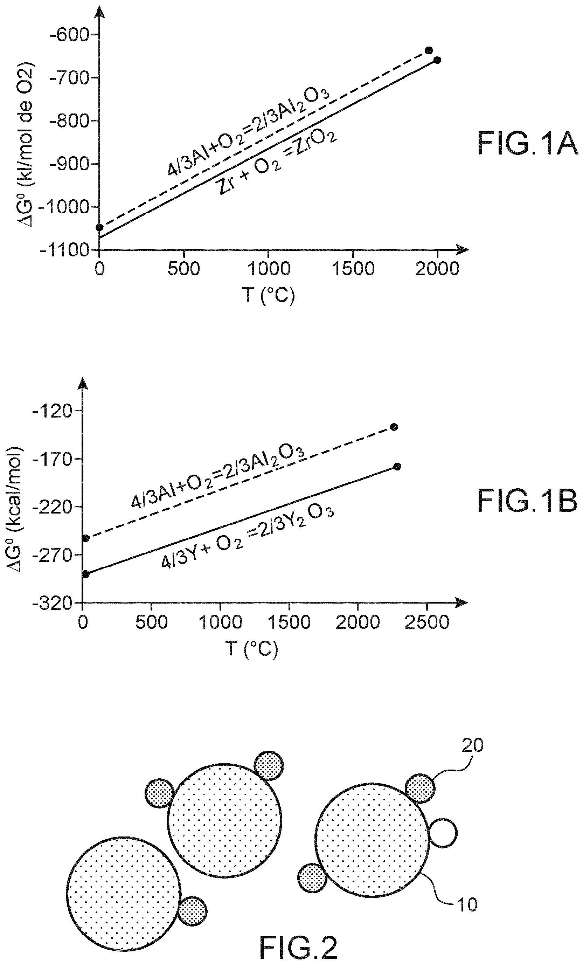

En effet, même si la zircone (ZrO₂) et l'yttrine (Y₂O₃) semblent plus stables thermodynamiquement que l'alumine quelle que soit la température (voir les diagrammes d'Ellingham représentés sur les figures 1A et 1B, obtenus à partir des données extraites des articles de Shen [1] et de Chu et al. [2] référencés à la fin de la description), il a été observé que, au cours du procédé de fabrication additive, on forme la phase germinante Al₃Zr par décomposition de la zircone yttriée.

Il ne paraissait pas évident que cette phase Al₃Zr (2^{ème} réaction) ait le temps de germer puisque les durées de vie des bains de métaux fondus, formés lors du procédé, sont relativement courts (de la centaine de microsecondes à la milliseconde). A première vue, cette réaction in-situ n'est ni thermodynamiquement ni cinétiquement favorisée par les conditions thermiques imposées par le procédé.

Avantageusement, le mélange de poudres comprend, en outre, un élément réducteur. Par élément réducteur, on entend un élément plus réducteur que Zr et Al. Cet élément, lorsqu'il est oxydé, favorise la germination hétérogène d'Al₃Zr, par exemple, en servant de substrat à cette germination.

L'élément réducteur est, de préférence, du magnésium ou un de ses alliages (notamment MgAl).

L'oxydation de l'élément réducteur peut provenir d'une réaction d'oxydoréduction en présence de Al₂O₃ et/ou d'une réaction avec l'oxygène résultant de la dissolution des particules de zircone yttriée.

Lorsque l'élément réducteur est en présence de Al₂O₃, une réaction de d'oxydoréduction peut avoir lieu, conduisant à la formation de Al et d'un oxyde de l'élément réducteur (par exemple un oxyde de magnésium Mg (tel que MgO) ou un oxyde d'un de ses alliages (de préférence MgAl₂O₄)).

Alternativement, le procédé de fabrication d'une pièce en alliage d'aluminium par fabrication additive peut conduire à la dissolution des deuxièmes particules en zircone yttriée. L'oxygène ainsi libéré peut directement s'associer avec l'élément réducteur pour former les substrats de germination hétérogène.

Avantageusement, le mélange comprend au moins 0,5% massique de l'élément réducteur. Par exemple, le mélange comprend entre 0,5 et 10% massique, préférentiellement entre 0,6 et 5% massique, encore plus préférentiellement entre 0,7 et 2% massique d'élément réducteur.

De préférence, l'élément réducteur est présent dans les premières particules, i.e. un des éléments additionnels de l'alliage d'aluminium est l'élément réducteur.

Pour les nuances d'alliages ne comportant pas d'élément réducteur, celui-ci pourra être ajouté sous forme particulaire dans le mélange. Par exemple, on peut ajouter des particules de Mg métal. On peut également ajouter des particules d'oxyde de magnésium.

Selon un mode de réalisation particulier, pour les nuances d'alliages contenant du Mg, on pourra également rajouter du magnésium métallique pour compenser l'évaporation différentielle susceptible de se produire lors du processus de fabrication additive.

Avantageusement, la zircone yttriée est un oxyde stable, facile à manipuler et/ou à stocker, par rapport à des éléments métalliques connus pour être fortement réducteurs.

Avantageusement, les deuxièmes particules ont une plus grande dimension allant de 5nm à 600nm, de préférence de 100nm à 400nm, et encore plus préférentiellement de 200nm à 300nm.

Avantageusement, le pourcentage volumique de deuxièmes particules (YSZ) dans le mélange de poudres va de 1,5% à 5% et encore plus préférentiellement de 1,5% à 2,5%.

Avantageusement, les premières particules ont une plus grande dimension allant de 10µm à 100µm, et de préférence de 20µm à 65µm.

Avantageusement, les éléments additionnels sont choisis parmi Cu, Si, Zn, Mg, Fe, Ti, Mn, Zr, Va, Ni, Pb, Bi et Cr.

Avantageusement, l'alliage d'aluminium est l'alliage 7075, l'alliage 6061, l'alliage 2219 ou l'alliage 2024.

Selon une première variante de réalisation avantageuse, le procédé de fabrication est un procédé de fusion sélective par laser.

Selon une deuxième variante de réalisation avantageuse, le procédé de fabrication est un procédé de fusion sélective par faisceau d'électrons.

Avantageusement, le mélange de poudres est réalisé dans un mélangeur dynamique 3D ou par mécano-synthèse.

Avantageusement, la surface spécifique du mélange, après mélange au mélangeur dynamique 3D, est supérieure à 0,3 m²/g.

Le procédé présente de nombreux avantages :
- être simple à mettre en œuvre, puisqu'il suffit de mélanger des poudres. Il s'agit d'une étape par voie sèche, rapide à réaliser et simple à mettre en place, quelle que soit la quantité de poudres ;
- être peu coûteux, et donc intéressant d'un point de vue industriel. A titre illustratif, le coût matière d'un alliage d'aluminium 6061 est d'environ 60€/kg et le coût matière d'un mélange de poudres comprenant l'alliage d'aluminium 6061 et la zircone yttriée (1,5% volumique) est d'environ 61,71€/kg; les oxydes de tantale et ZrH₂ sont significativement plus cher que la zircone yttriée (au moins 15 fois plus cher) ;
- pouvoir stocker/manipuler facilement la poudre de zircone yttriée, puisqu'il s'agit d'un oxyde : il n'y a pas besoin d'utiliser d'atmosphère inerte ;
- pouvoir facilement modifier le rapport volumique entre les poudres au moment du mélange de poudre,
- être facilement adaptable pour tout procédé de fabrication additive et pour tout alliage d'aluminium sujet au problème de fissuration à chaud,
- pouvoir utiliser les paramètres classiquement utilisés dans les procédés de fabrication additive.

L'invention concerne également une pièce en alliage d'aluminium, obtenue selon le procédé précédemment décrit, la pièce comprenant de la zircone yttriée. La pièce est dépourvue de fissuration/fissure.

Avantageusement, la pièce est un échangeur thermique.

D'autres caractéristiques et avantages de l'invention ressortiront du complément de description qui suit.

Il va de soi que ce complément de description n'est donné qu'à titre d'illustration de l'objet de l'invention et ne doit en aucun cas être interprété comme une limitation de cet objet, l'étendue de l'invention étant définie par les revendications.

### BRÈVE DESCRIPTION DES DESSINS

La présente invention sera mieux comprise à la lecture de la description d'exemples de réalisation donnés à titre purement indicatif et nullement limitatif en faisant référence aux dessins annexés sur lesquels :
La figure 1A précédemment décrite, est un diagramme d'Ellingham représentant les stabilités de l'oxyde d'aluminium (Al₂O₃) et de l'oxyde de zirconium (ZrO₂).
LA figure 1B précédemment décrite, est un diagramme d'Ellingham représentant les stabilités de l'oxyde d'aluminium (Al₂O₃) et de l'oxyde d'yttrium (Y₂O₃).
LA Figure 2 représente de manière schématique un mélange de poudres selon un mode de réalisation particulier du procédé de l'invention.
Les figures 3A, 3B, 3C et 3D sont des clichés obtenus au microscope électronique à balayage (MEB) de particules d'aluminium et de particules de zircone yttriée (YSZ) à différentes concentrations volumiques selon un mode de réalisation particulier de l'invention.
La figure 4A est un cliché obtenu au microscope optique selon le plan XY d'une pièce fabriquée à partir de particules d'un alliage d'aluminium 6061.
Les figures 4B, 4C, 4D et 4E sont des clichés obtenus au microscope optique selon le plan XY d'une pièce fabriquée à partir d'un mélange de particules d'un alliage d'aluminium 6061 et de particules d'YSZ à différentes concentrations volumiques selon différents modes de réalisation de l'invention.
Les figures 5A et 5B sont des images en diffraction d'électrons rétrodiffusés (EBSD) selon le plan XZ d'une pièce fabriquée à partir de particules d'aluminium et d'une pièce fabriquée, selon un mode de réalisation particulier de l'invention, à partir d'un mélange de particules d'un alliage d'aluminium 6061 et de 2% volumique de particules d'YSZ.
Les figures 6A et 6B sont des clichés obtenus au microscope électronique à balayage en électrons rétrodiffusés, selon le plan XY et selon le plan XZ respectivement, d'une pièce fabriquée à partir d'un mélange de particules d'un alliage d'aluminium 6061 et de 2% volumique de particules d'YSZ, selon un mode de réalisation particulier de l'invention.
La figure 7 est un graphique représentant la surface spécifique du mélange en fonction du pourcentage volumique d'YSZ, selon un mode de réalisation particulier de l'invention.
La figure 8A est un cliché obtenu par microscopie électronique en transmission d'une partie d'une pièce fabriquée selon un mode de réalisation particulier de l'invention.
Les figures 8B, 8C et 8D sont des cartographies des éléments Zr, O et Mg, réalisés dans l'encadré de la figure 8A.

Les différentes parties représentées sur les figures ne le sont pas nécessairement selon une échelle uniforme, pour rendre les figures plus lisibles.

Les différentes possibilités (variantes et modes de réalisation) doivent être comprises comme n'étant pas exclusives les unes des autres et peuvent se combiner entre elles.

### EXPOSÉ DÉTAILLÉ DE MODES DE RÉALISATION PARTICULIERS

Le procédé de fabrication d'une pièce en alliage d'aluminium par fabrication additive comprend les étapes successives suivantes :
a) fournir un mélange de poudres comprenant, et de préférence constitué par :
   - une première poudre comprenant des premières particules 10 en un premier matériau comprenant au moins 80% massique d'aluminium et jusqu'à 20% massique d'un ou plusieurs éléments additionnels,
   - une deuxième poudre comprenant des deuxièmes particules 20 en un deuxième matériau, le deuxième matériau étant de la zircone yttriée,
b) former une couche du mélange de poudres,
c) faire fondre localement la couche du mélange de poudres, de préférence, par balayage d'un faisceau laser ou par balayage d'un faisceau d'électrons, de manière à former une pluralité de zones fondues,
d) refroidir la pluralité de zones fondues à l'étape c) de manière à former une pluralité de zones solidifiées, cette pluralité de zones solidifiées étant constitutive des premiers éléments des pièces à construire.

Avantageusement, les étapes b), c) et d) peuvent être répétées au moins une fois de manière à former au moins une autre zone solidifiée sur la première zone solidifiée. Le procédé se répète jusqu'à obtenir la forme finale de la pièce. La première couche de mélange de poudres est formée sur un substrat.

L'ajout de particules 20 de zircone yttriée (ou YSZ pour « Yttria-Stabilized Zirconia »), aux premières particules 10 d'intérêt à base d'aluminium permet d'obtenir une structure de solidification équiaxe et une pièce finale en alliage d'aluminium sans fissuration.

De préférence, les premières particules 10 sont fonctionnalisées par les deuxièmes particules 20 (figure 2).

De préférence, les deuxièmes particules 20 sont constituées de zircone yttriée.

La zircone yttriée comprend, avantageusement, de 1 à 10% massique, et de préférence de 3% à 10% massique, d'oxyde d'yttrium. Elle peut également contenir de faibles quantités (typiquement inférieures à 3% massique) de polluants, classiquement rencontrés dans les procédés de fabrication des poudres, notamment des oxydes comme par exemple de l'oxyde d'hafnium.

La deuxième poudre de zircone yttriée représente, de préférence, au moins 1,5% volumique, du mélange de poudres, préférentiellement de 1,5% à 5%, par exemple de 1,5% à 2,5%.

Selon un mode de réalisation avantageux, les premières particules 10 ont une plus grande dimension allant de 10µm à 120µm et les deuxièmes particules 20 ont une plus grande dimension allant de 5nm à 600nm et, de préférence, de 100nm à 600nm, encore plus préférentiellement de 100nm à 400nm, et encore plus préférentiellement de 200nm à 300nm.

Les premières particules 10 et les deuxièmes particules 20 sont des éléments pouvant être de forme sphérique, ovoïde ou allongée. De préférence, les particules sont sensiblement sphériques et leur plus grande dimension est leur diamètre.

La première poudre est formée de premières particules 10 en un premier matériau. Le premier matériau comprend au moins 80% massique d'aluminium, et de préférence au moins 90% massique d'aluminium.

Les premières particules 10 peuvent comprendre jusqu'à 20% et de préférence jusqu'à 10% massique d'un ou plusieurs éléments additionnels (aussi appelés éléments d'alliage). Ces éléments sont, de préférence, choisis parmi le zinc, le magnésium, le cuivre, le silicium, le fer, le manganèse, le titane, le vanadium, le bismuth, le plomb, le nickel, le zirconium et le chrome.

De préférence, l'alliage est un alliage d'aluminium 7075, un alliage 2024, un alliage 2219 ou un alliage d'aluminium 6061.

Avantageusement, le mélange de poudres comprend, en outre, un élément réducteur, de préférence du magnésium ou un de ses alliages (notamment MgAl).

De préférence, le mélange comprend au moins 0,5% massique de l'élément réducteur. Par exemple, le mélange comprend entre 0,5 et 10% massique, préférentiellement entre 0,6 et 5% massique, encore plus préférentiellement entre 0,7 et 2% massique d'élément réducteur.

L'élément réducteur peut être présent dans les premières particules ou ajouté sous forme particulaire dans le mélange fourni à l'étape a).

Le mélange de poudres fourni à l'étape a) est réalisé en amont du procédé de fabrication additive.

Dans un mode préférentiel de mise en œuvre de l'invention, la première poudre et la deuxième poudre sont mélangées au mélangeur dynamique 3D, par exemple avec un mélangeur Turbula^{®}. Alternativement, il pourrait s'agir d'un procédé de mécano-synthèse.

Lors de l'étape c), on utilise un faisceau suffisamment énergétique pour faire fondre au moins les premières particules 10.

La couche déposée peut être localement fondue ou totalement fondue.

L'étape de fusion permet de créer des motifs fondus dans la couche du mélange de poudres. Une ou plusieurs zones de particules fondues peuvent être réalisées pour former le motif désiré. Les particules 10 formant le motif fondent complètement de manière à conduire, lors de la solidification (étape d), à une ou plusieurs zones solidifiées en un alliage d'aluminium.

Avantageusement, les étapes b), c) et d) peuvent être répétées au moins une fois de manière à former au moins une autre zone solidifiée sur la première zone solidifiée. Le procédé se répète jusqu'à obtenir la forme finale de la pièce.

Les poudres non solidifiées sont ensuite évacuées et la pièce finale est détachée du substrat.

La pièce obtenue, selon l'un de ces procédés, peut être soumise à une étape de recuit (traitement thermique) pour réduire les contraintes internes et améliorer les propriétés mécaniques.

Selon une première variante de réalisation, il s'agit d'un procédé de fusion laser sur lit de poudre (SLM). A titre illustratif et non limitatif, les paramètres du procédé de fabrication par fusion laser sur lit de poudre sont :
- entre 50 et 500W pour la puissance laser ;
- entre 100 et 2000 mm/s pour la vitesse laser ;
- entre 25 et 120µm pour la distance entre deux espaces vecteurs (« hatch » en terminologie anglo-saxone) ;
- entre 15 et 60µm pour l'épaisseur de couche.

Selon une autre variante de réalisation, il s'agit d'un procédé de fusion par faisceau d'électrons sur lit de poudre (EBM). A titre illustratif et non limitatif, les paramètres du procédé de fabrication par fusion par faisceau d'électrons sur lit de poudre sont
- entre 50 et 3000W pour le faisceau d'électrons ;
- entre 100 et 8000 mm/s pour la vitesse du faisceau ;
- entre 50 et 150µm pour la distance entre deux espaces vecteurs ;
- entre 40 et 60µm pour l'épaisseur de couche.

Les machines de dépôt utilisées pour les procédés de fabrication additive comprennent, par exemple, un système d'alimentation en poudre (« powder delivery system »), un dispositif d'étalement et d'homogénéisation de la surface de la poudre (« Roller » ou « Blade »), un faisceau (par exemple un faisceau laser infrarouge à une longueur d'onde de 1060nm environ), un scanner pour diriger le faisceau, et un substrat (aussi appelé plateau) qui peut descendre verticalement (selon un axe Z perpendiculaire au lit de poudre).

L'ensemble peut être confiné dans une enceinte thermiquement fermée et inertée, pour contrôler l'atmosphère, mais aussi pour éviter la dissémination des poudres.

Bien que cela ne soit aucunement limitatif, l'invention trouve particulièrement des applications dans le domaine de l'énergie, et plus particulièrement, des échangeurs thermiques, dans le domaine de l'aéronautique et dans le domaine de l'automobile.

### Exemples illustratifs et non limitatifs d'un mode de réalisation :

Dans cet exemple, des pièces en forme de cube de dimensions 10mm^{∗}10mm^{∗}10mm sont fabriquées par impression par SLM.

La pièce est obtenue à partir d'un mélange de deux poudres : une poudre d'alliage d'aluminium et une poudre d'YSZ.

La granulométrie de la poudre d'alliage d'Aluminium (Al6061) est la suivante : d₁₀=27,5µm, d₅₀=41,5µm et d₉₀=62,7µm.

Concernant la poudre d'YSZ, sa granulométrie est la suivante : diamètre de 120nm à 600nm. La poudre est commercialisée par la société Innovnano Materials sous la référence 2YSZ. Elle contient 3,5% massique de Y₂O₃.

La poudre d'Aluminium est étuvée à 180°C pendant 2 heures. Puis le mélange des deux poudres est réalisé en boîte à gant à partir de : 1200mL de la poudre d'alliage d'aluminium à raffiner, 24mL de la poudre de zircone yttriée (mélange à 2% volumique), et de 250mL de billes de Zircone de diamètre 3mm, utilisées pour homogénéiser le mélange. Le volume du pot de mélange est de 6,5L.

Le taux de remplissage, défini comme le rapport du volume représenté par les particules 10, les particules 20 et les billes de Zircone sur le volume du pot de mélange, est environ de 23%.

Le mélange est passé au mélangeur dynamique 3D, par exemple au Turbula^{®}, pendant 6h.

Le mélange est finalement tamisé grossièrement (1mm) pour récupérer les billes de zircone.

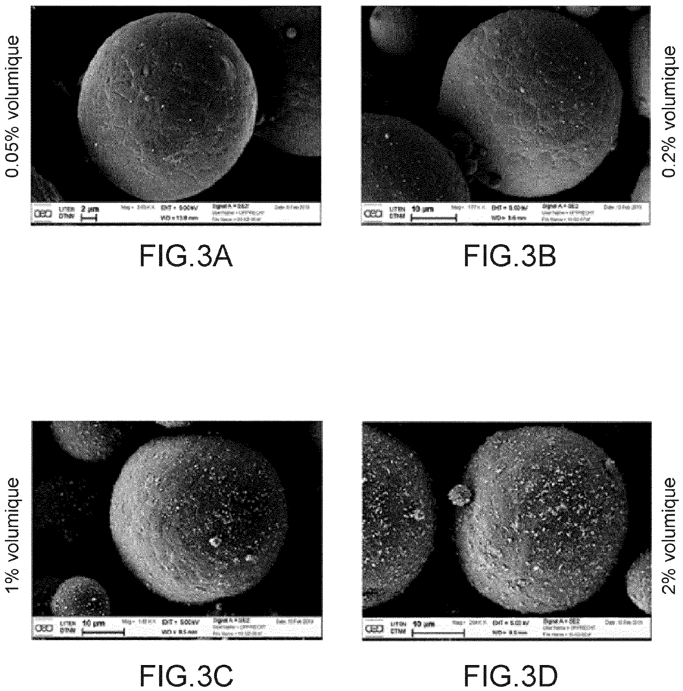

Différents mélanges de poudre ont été testés : le pourcentage volumique de poudres d'YSZ varie de 0,05% à 2% volumique. Les mélanges de poudres ont été observés au MEB (figure 3A à 3D). Les particules d'alliage d'aluminium 6061 apparaissent en gris et les particules d'YSZ en blanc.

Les mélanges sont ensuite utilisés pour fabriquer des pièces par impression 3D. A titre illustratif, les conditions SLM permettant d'obtenir les cubes les plus denses sont les suivantes : puissance laser : 190-270W ; vitesse laser : 400-800mm/s, espace vecteur : 100µm ; épaisseur de couche (lit de poudre): 20µm.

A titre de comparaison, une pièce en aluminium est fabriquée sans ajouter de poudres d'YSZ.

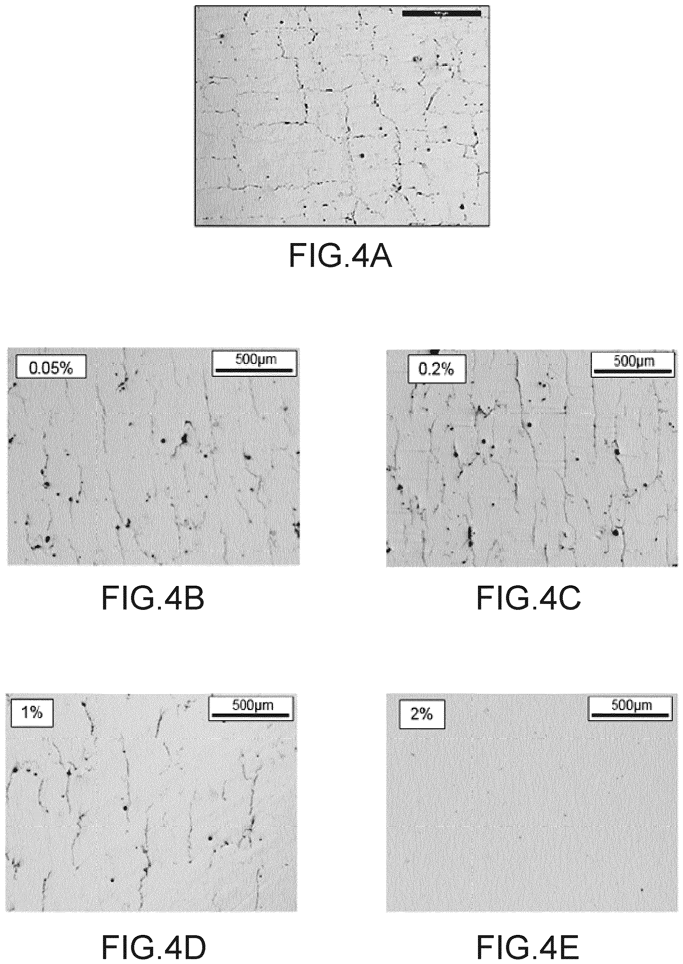

Les pièces fabriquées uniquement avec la poudre d'aluminium (figure 4A) ou avec les mélanges de poudres contenant de 0,05% à 1% volumique d'YSZ (figure 4B à 4D) présentent des fissures. La pièce obtenue avec le mélange de poudres contenant 2% volumique de poudres d'YSZ est une pièce dense dépourvue de fissures (figure 4E).

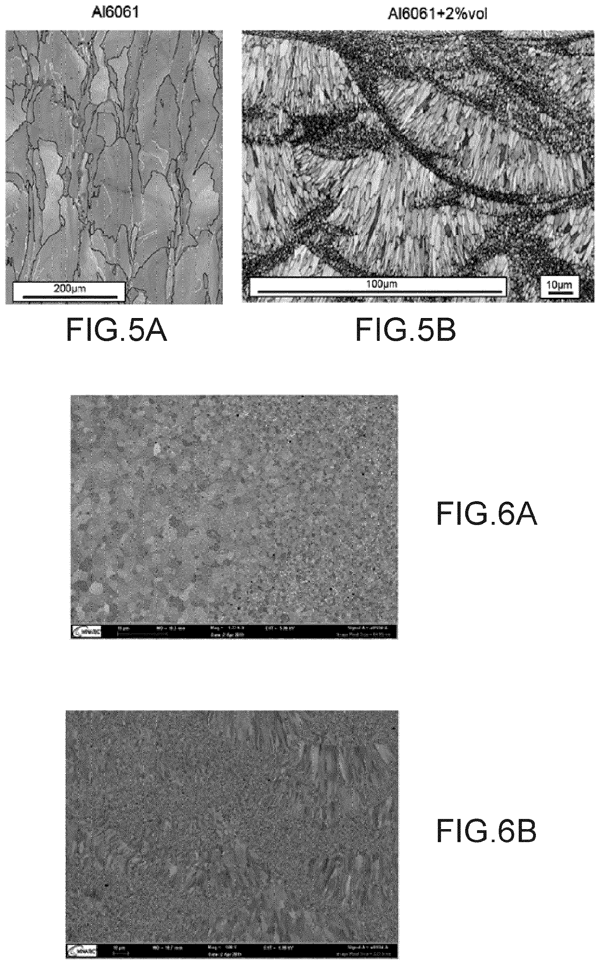

La pièce fabriquée sans ajouter de poudre d'YSZ et celle fabriquée avec 2% volumique d'YSZ ont été caractérisées par diffraction d'électrons rétrodiffusés (figures 5A et 5B respectivement) : l'ajout de 2% volumique d'YSZ conduit à un raffinement de la microstructure.

La pièce en aluminium fabriquée avec 2% volumique d'YSZ a également été caractérisée au MEB. Que ce soit dans le plan XZ (figure 6A) ou dans le plan XY (figure 6B), le raffinement des grains est parfaitement visible. L'axe Z correspond à l'axe de construction, i.e. à l'axe de l'empilement des couches du mélange de poudres (ou axe perpendiculaire au plateau de construction) ; les axes X et Y correspondent aux axes du plateau de construction, i.e. les axes X et Y sont parallèles à la surface principale du plateau de construction sur lequel sont déposées les couches de mélange de poudres.

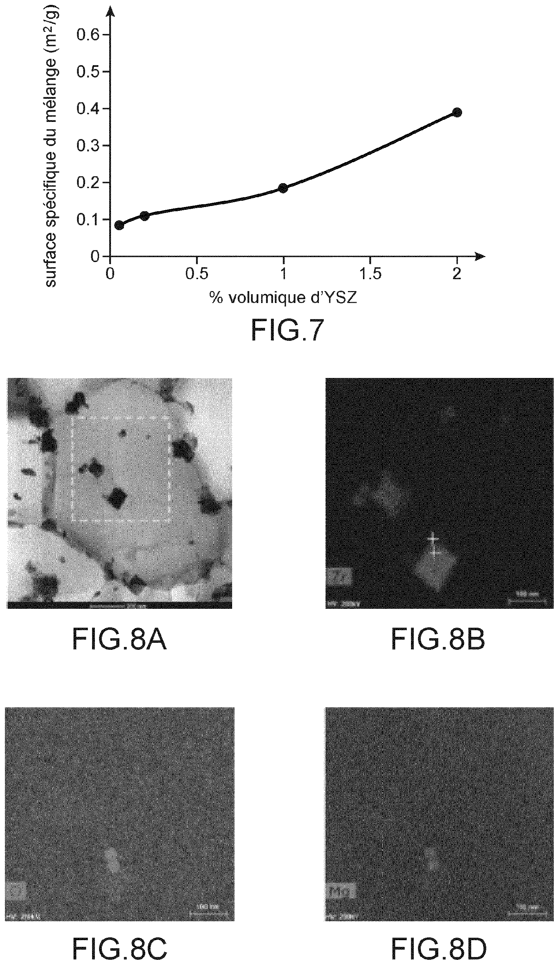

Finalement, des mesures de surface spécifiques par BET ont été réalisées sur les différents mélanges de poudre (figure 7). On constate qu'il faut une surface spécifique d'au moins 0,3m²/g pour résoudre les problèmes de fissuration à chaud. Ces mesures pourraient former une autre source de caractérisation en termes de quantité de germinants à ajouter pour éviter les phénomènes de fissuration.

Une caractérisation par microscopie électronique à transmission confirme la présence d'un oxyde contenant du magnésium (figures 8A à 8D).

### REFERENCES

[1] Shen "Carbothermal synthesis of metal-functionalized nanostructures for energy and environmental applications", J. Mater. Chem. A 3 (2015), 13114-13188.
[2] Chu et al. "Sintering of aluminum nitride by using alumina crucible and MoSi2 heating element at temperatures of 1650°C and 1700°C", Ceramics International 35 (2009), 3455-3461.

## Revendications

1. Procédé de fabrication d'une pièce en alliage d'aluminium par fabrication additive comprenant une étape au cours de laquelle une couche d'un mélange de poudres est localement fondue puis solidifiée, **caractérisé en ce que** le mélange de poudres comprend :
- des premières particules (10) comprenant au moins 80% massique d'aluminium et jusqu'à 20% massique d'un ou plusieurs éléments additionnels, et
- des deuxièmes particules (20) en zircone yttriée,
le mélange de poudres comprenant au moins 1,5% volumique de deuxièmes particules.

2. Procédé selon l'une quelconque des revendications précédentes, **caractérisé en ce que** les deuxièmes particules (20) ont une plus grande dimension allant de 5nm à 600nm, de préférence de 100nm à 400nm, et encore plus préférentiellement de 200 nm à 300nm.

3. Procédé selon l'une quelconque des revendications précédentes, **caractérisé en ce que** le pourcentage volumique de deuxièmes particules 20) dans le mélange de poudres va de 1,5% à 2,5%.

4. Procédé selon l'une quelconque des revendications précédentes, **caractérisé en ce que** les premières particules (10) ont une plus grande dimension allant de 10µm à 100µm, et de préférence de 20µm à 65µm.

5. Procédé selon l'une quelconque des revendications précédentes, **caractérisé en ce que** les éléments additionnels sont choisis parmi Cu, Si, Zn, Mg, Fe, Ti, Mn, Zr, Va, Ni, Pb, Bi et Cr.

6. Procédé selon l'une quelconque des revendications précédentes, **caractérisé en ce que** l'alliage d'aluminium est l'alliage 7075, l'alliage 2024, l'alliage 2219 ou l'alliage 6061.

7. Procédé selon l'une quelconque des revendications 1 à 6, **caractérisé en ce que** le procédé de fabrication est un procédé de fusion sélective par laser ou un procédé de fusion sélective par faisceau d'électrons.

8. Procédé selon l'une quelconque des revendications 1 à 7, **caractérisé en ce que** le mélange de poudres est réalisé dans un mélangeur dynamique 3D ou par mécano-synthèse.

9. Procédé selon la revendication précédente, **caractérisé en ce que** la surface spécifique du mélange, après mélange au mélangeur dynamique 3D, est supérieure à 0,3 m²/g.

10. Procédé selon l'une quelconque des revendications précédentes, **caractérisé en ce que** le mélange de poudres comprend, en outre, un élément réducteur.

11. Procédé selon la revendication 10, **caractérisé en ce que** l'élément réducteur est du magnésium.

12. Procédé selon l'une des revendications 10 et 11, **caractérisé en ce que** le mélange de poudres comprend au moins 0,5% massique, et de préférence entre 0,5% et 10% massique de l'élément réducteur.

13. Procédé selon l'une des revendications 10 à 12, **caractérisé en ce que** l'élément réducteur est présent dans les premières particules.

14. Pièce en alliage d'aluminium obtenue selon le procédé tel que défini dans l'une quelconque des revendications 1 à 13, **caractérisé en ce qu'**elle comprend de la zircone et de l'yttrium.

15. Pièce selon la revendication précédente, **caractérisée en ce que** la pièce est un échangeur thermique.

## Patentansprüche

1. Verfahren zur Herstellung eines Werkstücks aus Aluminiumlegierung durch additive Herstellung, umfassend einen Schritt, in dessen Verlauf eine Schicht aus einer Pulvermischung lokal geschmolzen und dann ausgehärtet wird, **dadurch gekennzeichnet, dass** die Pulvermischung umfasst:
- erste Partikel (10), umfassend wenigstens 80 Massen-% Aluminium und bis zu 20 Massen-% von einem oder mehreren zusätzlichen Elementen, und
- zweite Partikel (20) aus Yttrium-stabilisiertem Zirkonoxid,
wobei die Pulvermischung wenigstens 1,5 Volumen-% von zweiten Partikeln enthält.

2. Verfahren nach einem der vorhergehenden Ansprüche, **dadurch gekennzeichnet, dass** die zweiten Partikel (20) eine größere Abmessung haben, die von 5 nm bis 600 nm geht, vorzugsweise von 100 nm bis 400 nm, und noch weiter bevorzugt von 200 nm bis 300 nm.

3. Verfahren nach einem der vorhergehenden Ansprüche, **dadurch gekennzeichnet, dass** der Volumenprozentsatz von zweiten Partikeln (20) in der Pulvermischung von 1,5 % bis 2,5 % geht.

4. Verfahren nach einem der vorhergehenden Ansprüche, **dadurch gekennzeichnet, dass** die ersten Partikel (10) eine größere Abmessung haben, die von 10 µm bis 100 µm geht, und vorzugsweise von 20 µm bis 65 µm.

5. Verfahren nach einem der vorhergehenden Ansprüche, **dadurch gekennzeichnet, dass** die zusätzlichen Elemente ausgewählt werden aus Cu, Si, Zn, Mg, Fe, Ti, Mn, Zr, Va, Ni, Pb, Bi und Cr.

6. Verfahren nach einem der vorhergehenden Ansprüche, **dadurch gekennzeichnet, dass** die Aluminiumlegierung die Legierung 7075, die Legierung 2024, die Legierung 2219 oder die Legierung 6061 ist.

7. Verfahren nach einem der Ansprüche 1 bis 6, **dadurch gekennzeichnet, dass** das Herstellungsverfahren ein selektives Schmelzverfahren mittels Laser oder ein selektives Schmelzverfahren mittels Elektronenstrahl ist.

8. Verfahren nach einem der Ansprüche 1 bis 7, **dadurch gekennzeichnet, dass** die Pulvermischung in einem dynamischen 3D-Mischer oder durch eine Mechanosynthese realisiert wird.

9. Verfahren nach dem vorhergehenden Anspruch, **dadurch gekennzeichnet, dass** die spezifische Oberfläche der Mischung nach dem Mischen im dynamischen 3D-Mischer größer als 0,3 m²/g ist.

10. Verfahren nach einem der vorhergehenden Ansprüche, **dadurch gekennzeichnet, dass** die Pulvermischung ferner ein reduzierendes Element enthält.

11. Verfahren nach Anspruch 10, **dadurch gekennzeichnet, dass** das reduzierende Element Magnesium ist.

12. Verfahren nach einem der Ansprüche 10 und 11, **dadurch gekennzeichnet, dass** die Pulvermischung wenigstens 0,5 Massen-% und vorzugsweise zwischen 0,5 Massen-% und 10 Massen-% des reduzierenden Elements enthält.

13. Verfahren nach einem der Ansprüche 10 bis 12, **dadurch gekennzeichnet, dass** das reduzierende Element in den ersten Partikeln vorhanden ist.

14. Werkstück aus Aluminiumlegierung, das gemäß dem Verfahren wie in einem der Ansprüche 1 bis 13 definiert erhalten ist, **dadurch gekennzeichnet, dass** es Zirkonoxid und Yttrium enthält.

15. Werkstück nach dem vorhergehenden Anspruch, **dadurch gekennzeichnet, dass** das Werkstück ein Wärmetauscher ist.

## Claims

1. A method for manufacturing an aluminium alloy part by additive manufacturing comprising a step during which a layer of a mixture of powders is locally melted and then solidified, wherein the mixture of powders comprises:
- first particles (10) comprising at least 80% by mass of aluminium and up to 20% by mass of one or more additional elements, and
- second particles (20) made of yttria-stabilized zirconia,
the mixture of powders comprising at least 1.5% by volume of second particles.

2. The method according to any one of the preceding claims, wherein the second particles (20) have a larger dimension ranging from 5nm to 600nm, preferably from 100nm to 400nm, and even more preferably from 200 nm to 300 nm.

3. The method according to any one of the preceding claims, wherein the volume percentage of second particles (20) in the mixture of powders ranges from 1.5% to 2.5%.

4. The method according to any one of the preceding claims, wherein the first particles (10) have a larger dimension ranging from 10µm to 100µm, and preferably from 20µm to 65µm.

5. The method according to any one of the preceding claims, wherein the additional elements are selected from Cu, Si, Zn, Mg, Fe, Ti, Mn, Zr, Va, Ni, Pb, Bi and Cr.

6. The method according to any one of the preceding claims, wherein the aluminium alloy is the alloy 7075, the alloy 2024, the alloy 2219 or the alloy 6061.

7. The method according to any one of claims 1 to 6, wherein the manufacturing method is a selective laser melting method or a selective electron beam melting method.

8. The method according to any one of claims 1 to 7, wherein the method comprises a step in which the mixture of powders is obtained in a 3D dynamic mixer or by mechano-synthesis.

9. The method according to the preceding claim, wherein the specific surface of the mixture of powders, after mixing with the 3D dynamic mixer, is greater than 0.3 m²/g.

10. The method according to any one of the preceding claims, wherein the mixture of powders further comprises a reducing element.

11. The method according to claim 10, wherein the reducing element is magnesium.

12. The method according to one of claims 10 and 11, wherein the mixture of powders comprises at least 0.5% by mass, and preferably between 0.5% and 10% by mass of the reducing element.

13. The method according to one of claims 10 to 12, wherein the reducing element is present in the first particles.

14. An aluminium alloy part obtained according to the method as defined in any one of claims 1 to 13, wherein it comprises zirconia and yttrium.

15. The part according to the preceding claim, wherein the part is a heat exchanger.
